(19) **Europäisches Patentamt**

**European Patent Office**

**Office européen des brevets**

(11) **EP 0 892 214 B1**

(12) **EUROPÄISCHE PATENTSCHRIFT**

(45) Veröffentlichungstag und Bekanntmachung des Hinweises auf die Patenterteilung:
**02.10.2002 Patentblatt 2002/40**

(51) Int Cl.$^7$: **F23L 7/00**, F23C 9/08

(21) Anmeldenummer: **98113199.8**

(22) Anmeldetag: **15.07.1998**

(54) **Verfahren und Vorrichtung zum Betreiben von Gasbrennern**

Method and device for operating a gas burner

Dispositif et procédé pour le fonctionnement d'un brûleur à gaz

(84) Benannte Vertragsstaaten:
**AT DE FR GB IT NL**

(30) Priorität: **18.07.1997 DE 19730951**
**30.07.1997 DE 19732867**

(43) Veröffentlichungstag der Anmeldung:
**20.01.1999 Patentblatt 1999/03**

(73) Patentinhaber: **Linde AG**
**65189 Wiesbaden (DE)**

(72) Erfinder:
• **Wandke, Ernst, Dr. Dipl.-Ing.**
**82538 Geretsried (DE)**

• **Strigl, Reinhard, Dipl.-Ing.**
**80995 München (DE)**

(74) Vertreter: **Kasseckert, Rainer et al**
**Linde AG**
**Zentrale Patentabteilung**
**Dr.-Carl-von-Linde-Strasse 6-14**
**82049 Höllriegelskreuth (DE)**

(56) Entgegenhaltungen:
**EP-A- 0 072 630      EP-A- 0 204 059**
**DE-A- 4 313 102      DE-A- 19 628 741**
**US-A- 2 800 175      US-A- 3 905 745**
**US-A- 5 309 850**

**Beschreibung**

Die Erfindung betrifft ein Verfahren und eine Vorrichtung zum Betreiben eines Gasbrenners zum Erwärmen von Gut in einem Ofen, wobei ein Brenngas, insbesondere Erdgas, mit einem Gasgemisch verbrannt wird, welches Sauerstoff und Ballastgase enthält.

Bei der Wärmebehandlung von Gut, beispielsweise Eisenmetallen, ist das Aufheizen in den meisten Fällen der zeit- und kostenbestimmende Faktor. Es ist bekannt, daß die Energieaufnahme des Gutes bei niedrigen Temperaturen vorwiegend über Konvektion durch die heißen Rauchgase erfolgt, während mit steigender Temperatur zunehmend die Wärmestrahlung für die Wärmeübertragung auf das Gut verantwortlich ist. Weiterhin ist bekannt, daß je nach Art der Energiequelle, d. h. je nach Brennerart, Brennstoff und Verbrennungsgas, die Anteile der Wärmeenergie und die Abgasmenge sowie die erzielten Temperaturen sehr unterschiedlich sein können.

Das Gut wird in der Regel in Industrieöfen erwärmt, die direkt mit Erdgas-Luft-Brennem beheizt werden. Bei der Verbrennung von Erdgas mit Luft läuft folgende chemische Reaktion ab:

$$CH_4+2O_2+8N_2 \rightarrow CO_2+2H_2O+8N_2$$

Unter den eingangs erwähnten Ballastgasen sollen solche Gase verstanden werden, die zwar durch die Verbrennungszone gehen, aber aus dieser wieder chemisch unverändert hervorgehen, jedoch vor allem kühlend auf die Flammentemperatur wirken. Die kühlende Wirkung der Ballastgase kann aber beispielsweise durchaus erwünscht sein. Bei der oben angeführten Verbrennung von Brenngas mit Luft ist Stickstoff zwar bei der Verbrennungsreaktion anwesend, wird aber chemisch nicht oder nur in geringem Umfang verändert. Stickstoff wird in diesem Zusammenhang daher als Ballastgas bezeichnet.

Durch eine Anreicherung der Verbrennungsluft mit Sauerstoff wird der Anteil von $CO_2$ und $H_2O$ im Abgas erhöht, wodurch die Wärmeübertragung infolge höherer Strahlungsemissionen auf das Gut verbessert wird. Die Verbrennung von Erdgas mit 100% Sauerstoff anstelle angereicherter Luft

$$CH_4+2O_2 \rightarrow CO_2+2 H_2O$$

hat den Vorteil, daß die entstehende Ofenatmosphäre fast nur aus den wärmetechnisch günstigen Komponenten $CO_2$ und $H_2O$ besteht und der Stickstoff praktisch verschwindet. Dadurch sinkt auch der abgasbedingte Wärmeverlust. Beide Faktoren führen zu einer Einsparung von Brenngas.

Problematisch kann bei Erdgas-Sauerstoff-Brennern die sehr hohe Flammentemperatur sein. Der Temperaturbelastung können die Brennermaterialien nur bedingt standhalten. In der US 2,800,175 wird daher ein Verfahren zum Betreiben eines Erdgas-Sauerstoff-Brenners vorgeschlagen, bei dem ein Teil der bei der Verbrennung entstehenden Abgase zurückgeführt und mit dem Sauerstoff und dem Erdgas gemischt wird. Dadurch wird die Flammentemperatur abgesenkt und der Betrieb des Brenners mit einem Erdgas-Sauerstoff-Gemisch ohne Schädigung des Brenners möglich.

Aufgabe vorliegender Erfindung ist es, ein optimiertes Verfahren der eingangs genannten Art sowie eine entsprechende Vorrichtung aufzuzeigen, die zu einer Verkürzung der Aufheizzeiten des Gutes, zu einer Einsparung an Brenngas und zu verminderten Emissionen von Schadstoffen führen.

Diese Aufgabe wird erfindungsgemäß durch die Merkmale des Anspruchs 1 gelöst.

Die Erfindung nutzt die Tatsache, daß bei niedrigen Temperaturen das Gut hauptsächlich über Konvektion und bei höheren Temperaturen vor allem über Wärmestrahlung aufgeheizt wird. Durch die erfindungsgemäße Änderung der Ballastgasmenge in dem Gasgemisch wird die Menge und Zusammensetzung des bei der Verbrennung entstehenden Abgases geändert. Außerdem wird infolge der kühlenden Wirkung der Ballastgase die Flammentemperatur beeinflußt. Bei niedrigen Guttemperaturen wird der Anteil der Ballastgase in dem Gasgemisch relativ hoch gehalten, womit auch die resultierende Abgasmenge groß ist. Da die Erwärmung in diesem Temperaturbereich hauptsächlich über Konvektion durch die Abgase erfolgt, wird eine schnelle Erwärmung des Gutes erreicht. Bei höheren Guttemperaturen wird dann die Menge der Ballastgase reduziert. Dies bewirkt eine höhere Flammentemperatur und damit eine größere Strahlungsemission. Durch die erfindungsgemäße Änderung der Ballastgasmenge wird zwar auch der relative Sauerstoffanteil in dem Gasgemisch verändert, die absolute Sauerstoffmenge bleibt dagegen in der Regel konstant und der Brenngasmenge angepaßt, um eine stöchiometrische Verbrennung zu erzielen.

Unter Guttemperatur wird zwar bevorzugt die im Inneren oder an der Oberfläche des Gutes herrschende Temperatur verstanden, es kann jedoch auch die Temperatur in der näheren Umgebung des Gutes erfindungsgemäß als Guttemperatur verwendet werden. Auch die Raumtemperatur im Ofen kann, sofern diese nicht zu stark von der eigentlichen Temperatur des Gutes abweicht, als Guttemperatur im Sinne der Erfindung herangezogen werden.

Beim Einsatz von Luft als Sauerstofflieferant ergibt sich aufgrund des Stickstoffanteils in der Luft etwa die 5fache Menge an Abgas im Vergleich zu einer Verbrennung eines Brenngases, wie z.B. Erdgas, mit reinem Sauerstoff. Durch die größere Abgasmenge eines Brenngas-Luft-Brenners wird bei relativ niedrigen Guttemperaturen mehr Energie auf das Gut übertragen als bei einem Brenngas-Sauerstoff-Brenner, da in diesem Temperaturbereich die Konvektion der Abgase der bestimmende Übertragungsfaktor ist. Bei hohen Temperaturen wird jedoch die Strahlung zur dominierenden Wärmeübertragungsform, so daß die heißere Brenngas-Sauerstoff-Flamme Vorteile bringt.

Vorzugsweise wird der Brenner daher bei Guttemperaturen unterhalb einer Umschalttemperatur zunächst mit Luft als Oxidationsmittel betrieben. Die resultierende große Abgasmenge hat eine schnelle Erwärmung des Gutes über Konvektion durch die heißen Abgase zur Folge. Bei einer bestimmten Umschalttemperatur wird der Brenner dann mit Sauerstoff anstelle von Luft betrieben, um höhere Temperaturen und eine im Hinblick auf die Strahlungsemission bessere Abgaszusammensetzung zu erzielen.

Die Verwendung eines reinen Sauerstoff-Brenngas-Gemisches führt zu einer Schädigung des Brenners. Aus diesem Grund wird erfindungsgemäß das Brenngas mit Sauerstoff und einem $CO_2$-$H_2O$-Gemisch oder mit Sauerstoff und $CO_2$ verbrannt. Der durch Strahlung übertragene Wärmestrom hängt außer von der Temperatur auch von der Art des verwendeten Gases ab. Die Emissionswerte von $CO_2$ und $H_2O$ liegen bei hohen Temperaturen deutlich über denen von Stickstoff, so daß die Strahlungsemission bei einer Sauerstoff-Fahrweise des Brenners unter Zusatz von $CO_2$ und/oder $H_2O$ selbst bei gleichen Temperaturen wesentlich über der eines Luftbrenners liegt.

Die Umschaltung des Brenners von Brenngas-Luft-Betrieb auf Brenngas-Sauerstoff-Betrieb kann nicht nur durch das Überschreiten der Guttemperatur über eine bestimmte Umschalttemperatur veranlaßt werden. Es ist ebenso von Vorteil, die Guttemperatur wiederholt zu messen, aus den Meßwerten die Aufheizgeschwindigkeit, d.h. die Temperaturzunahme des Gutes pro Zeit, und/oder die Aufheizbeschleunigung zu bestimmen und in Abhängigkeit von der Aufheizgeschwindigkeit oder Aufheizbeschleunigung das Brenngas entweder mit Luft oder mit Sauerstoff und einem $CO_2$-$H_2O$-Gemisch oder mit Sauerstoff und $CO_2$ zu verbrennen.

Zu Beginn wird das Gut durch die Verbrennung von Brenngas mit Luft beheizt. Wird bei steigenden Guttemperaturen die Wärmeübertragung durch Konvektion geringer, so äußert sich dies in einer Verringerung der Aufheizgeschwindigkeit bzw. einer entsprechenden Änderung der Aufheizbeschleunigung. In Abhängigkeit von diesen Änderungen wird dann anstelle von Luft ein $CO_2$-$H_2O$-Gemisch oder $CO_2$ eingesetzt, um eine bessere Wärmeübertragung durch Strahlung und damit eine schnellere Erwärmung des Gutes zu erzielen.

Bei dem Brenngas-Sauerstoff-Betrieb wird die Menge des $CO_2$-$H_2O$-Gemisches oder des $CO_2$ von Vorteil so gewählt, daß dessen Wärmekapazität gleich der Wärmekapazität des Stickstoffanteils der Luftmenge ist, deren Sauerstoffanteil der Menge des dem Brenner zugeführten Sauerstoffs entspricht. Auf diese Weise werden die bei Brenngas-Sauerstoff-Brennern entstehenden hohen Temperaturen auf das Niveau von Brenngas-Luft-Brennern abgesenkt. Temperaturbedingte Schädigungen des Brenners werden vermieden.

Die Erfindung eignet sich besonders zum Betreiben von Brennern zur Wärmebehandlung von Gut in einem Durchlaufofen. Hierbei werden die Brenner in der Aufheizzone mit Brenngas und Luft und die Brenner in der Überhitzungszone mit Brenngas und Sauerstoff sowie einem $CO_2$-$H_2O$-Gemisch oder $CO_2$ betrieben.

Es hat sich als günstig erwiesen, den Brenner von Anfang an mit Sauerstoff und einem $CO_2$-$H_2O$-Gemisch oder $CO_2$ zu betreiben und die Menge an dem $CO_2$-$H_2O$-Gemisch oder $CO_2$ bei steigenden Guttemperaturen bis auf eine Minimalmenge zu reduzieren. Ein Ventilator zur Luftzuführung und Ventile zum Umschalten zwischen Luft- und Sauerstoffbetrieb können somit entfallen.

Auch bei dieser Verfahrensweise ist es vorteilhaft, die Guttemperatur wiederholt zu messen, aus den Meßwerten die Aufheizgeschwindigkeit und/oder die Aufheizbeschleunigung zu bestimmen und die Menge des $CO_2$-$H_2O$-Gemisches oder des $CO_2$ in Abhängigkeit von der Aufheizgeschwindigkeit oder Aufheizbeschleunigung festzulegen.

Je nachdem, ob der Brenner während der gesamten Wärmebehandlung mit Sauerstoff und einem $CO_2$-$H_2O$-Gemisch oder $CO_2$ gefahren wird, oder ob der Brenner bei niedrigen Temperaturen mit Luft gefahren wird, liegt die Menge des $CO_2$-$H_2O$-Gemisches oder des $CO_2$ vorzugsweise zwischen dem 2- und 7-fachen, insbesondere zwischen dem 3- und 5-fachen, der dem Brenner zugeführten Sauerstoffmenge.

Die für das Aufheizen des Gutes benötigte Zeit wird besonders wirksam verkürzt, wenn die Menge an dem $CO_2$-$H_2O$-Gemisch oder $CO_2$ bei steigenden Guttemperaturen kontinuierlich bis zu einem Minimalwert reduziert wird. Der Minimalwert wird üblicherweise durch die Beständigkeit des Brenners gegenüber hohen Temperaturen bestimmt. Der Brenner wird daher vorzugsweise von Beginn an mit Sauerstoff und einem $CO_2$-$H_2O$-Gemisch oder $CO_2$ gefahren, wobei bei steigenden Temperaturen die Menge des $CO_2$-$H_2O$-Gemisches oder des $CO_2$ und damit die Abgasmenge kontinuierlich so eingestellt werden, daß eine optimale Wärmeübertragung auf das Gut erzielt wird.

Es hat sich, da verfahrenstechnisch einfacher, als günstig erwiesen, die Menge an dem $CO_2$-$H_2O$-Gemisch oder $CO_2$ bei steigenden Guttemperaturen nicht kontinuierlich, sondern schrittweise bis zu einem Minimalwert zu reduzieren.

Die Menge an $CO_2$-$H_2O$-Gemisch oder $CO_2$ kann auch in einem Schritt reduziert werden, wenn die Guttemperatur eine bestimmte Umschalttemperatur erreicht.

Die Umschalttemperatur, bei der der Brenner von Brenngas-Luft-Betrieb auf Brenngas-Sauerstoff-Betrieb umgeschaltet oder die Menge an $CO_2$-$H_2O$-Gemisch oder $CO_2$ verringert wird, wenn der Brenner von Anfang an mit Brenngas, Sauerstoff und einem $CO_2$-$H_2O$-Gemisch oder $CO_2$ betrieben wird, ist von mehreren Parametern, wie z.B. der Brenngas- und Abgaszusammensetzung oder der Art des zu behandelnden Gutes, abhängig. Vorzugsweise erfolgt die Umschaltung jedoch bei einer Temperatur zwischen 400 °C und 800 °C, besonders bevorzugt zwischen 500 °C und 700 °C und äußerst bevorzugt zwischen 550 °C und 650 °C.

Die erfindungsgemäße Zugabe von $CO_2$ und/oder $H_2O$ zum Sauerstoff und dem Brenngas kann beispielsweise aus entsprechenden Speicherbehältern erfolgen. Vorzugsweise wird jedoch zumindest ein Teil des bei der Verbrennung entstehenden Abgases zum Brenner zurückgeführt. Bei einer stöchiometrischen Verbrennung von Erdgas und Sauerstoff entstehen als Abgas $CO_2$ und $H_2O$. Die Rückführung dieser Abgase zum Brenner ist technisch einfach zu realisieren und führt zudem zu einer Verringerung der Ofenemissionen. Vorzugsweise werden zwischen 50 und 100 % der Abgase zurückgeführt.

Bei einem hohen $H_2O$-Gehalt des Abgases besteht die Gefahr, daß das Gut im Ofen zu stark oxidiert. Es ist daher günstig, das im Kreis gefahrene Abgas zu kühlen, wodurch ein Großteil des Wassers ausfällt. Über eine derartige Kühlung kann dann der $H_2O$-Gehalt im Ofen reguliert werden.

Das erfindungsgemäße Verfahren eignet sich für die Anwendung in Industrieöfen, wie Glühöfen, Schmiedeöfen, Schmelzöfen, Aluminiumschmelzöfen oder Stoßöfen.

Die Erfindung bezieht sich neben dem Verfahren auch auf einen Gasbrenner zur Durchführung des erfindungsgemäßen Verfahrens.

Erfindungsgemäß weist der Brenner mindestens eine Zuleitung für ein Brenngas, mindestens eine Zuleitung für Luft, mindestens eine Zuleitung für Sauerstoff und mindestens eine Zuleitung für ein $CO_2$-$H_2O$-Gemisch oder $CO_2$ auf sowie Mittel zur Verbindung der Zuleitung für Luft oder der Zuleitung für Sauerstoff sowie der Zuleitung für ein $CO_2$-$H_2O$-Gemisch oder $CO_2$ mit dem Gasbrenner. Ein derartiger Brenner kann dann entweder als Brenngas-Luft-Brenner oder als Brenngas-Sauerstoff-Brenner betrieben werden.

Vorteilhaft ist auch eine Abgasrückleitung von dem Ofen zu dem Gasbrenner, wobei besonders bevorzugt die Zuleitung für den Sauerstoff in die Abgasrückleitung mündet.

Zur Rückführung des Abgases kann eine Pumpe bzw. ein Ventilator in der Abgasrückleitung vorgesehen sein. Von Vorteil ist aber eine Düse, z.B. eine Venturidüse, vorgesehen, mittels der Sauerstoff in die Abgasrückleitung eingedüst wird, und wobei nach dem Wasserstrahlpumpenprinzip Abgas über die Abgasrückleitung aus dem Ofen angesaugt wird.

Die Erfindung weist wesentliche Vorteile gegenüber dem Stand der Technik auf. Die Aufheizphase des Gutes wird optimiert und dadurch um bis zu 50 % verkürzt. Der Verbrauch an Brenngas, z.B. Erdgas, wird ebenfalls reduziert. Die beim Brennerbetrieb anfallende Abgasmenge ist im Vergleich zu herkömmlichen Verfahren wesentlich kleiner. Die Schadstoffemission ist deutlich geringer, die $NO_x$-Emission praktisch null.

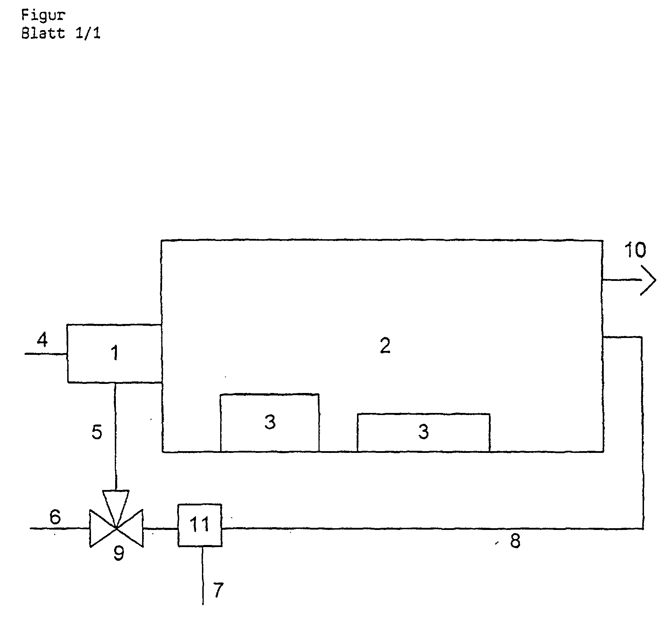

Die Erfindung sowie weitere vorteilhafte Einzelheiten der Erfindung werden im folgenden anhand der schematischen Zeichnung beispielhaft näher erläutert. Hierbei zeigt die einzige Figur einen mit einem Erdgasbrenner beheizten Industrieofen.

Ein Industrieofen 2 wird mit einem Brenner 1 beheizt. Der Brenner 1 wird über Leitung 4 mit Erdgas und über Leitung 5 mit einem sauerstoffhaltigen Gasgemisch versorgt. In dem Ofen 2 befindet sich das zu erwärmende Gut 3. Zu Beginn der Erwärmung des Gutes 3 wird der Brenner 1 mit einem Erdgas-Luft-Gemisch betrieben. Hierzu wird das Ventil 9 so eingestellt, daß die Verbindung zwischen Leitung 5 und Leitung 8 unterbrochen und die Verbindung zu Leitung 6 hergestellt ist. Über Leitung 6 wird beispielsweise mit Hilfe eines nicht dargestellten Gebläses dem Brenner 1 Luft zugeführt. Zur Verbrennung von 22 m$^3$ Erdgas müssen etwa 220 m$^3$ Luft zu dem Brenner 1 geleitet werden. Bei der Verbrennung entstehen dann 242 m$^3$ Abgas, die durch Konvektion das Gut 3 erwärmen. Das Abgas wird über Leitung 10 aus dem Ofen 2 abgeführt.

Bei Temperaturen über 600 °C ist die Wärmestrahlung der vorherrschende Wärmeübertragungsmechanismus. Die Guttemperatur im Ofen 2 wird vorzugsweise mittels eines Thermoelementes oder eines Pyrometers bestimmt. Wenn die Guttemperatur 600 °C erreicht hat, wird das Ventil 9 umgeschaltet, so daß dem Brenner 1 über Leitung 7 Sauerstoff und über Leitung 8 Abgas aus dem Ofen 2 zugeführt werden kann. An der Mündung der Leitung 7 in die Leitung 8 ist eine Düse 11 vorgesehen, so daß durch den einströmenden Sauerstoff das Abgas über Leitung 8 aus dem Ofen 2 abgesaugt wird.

Bei der Sauerstofffahrweise werden dann 22 m$^3$ Erdgas mit 44 m$^3$ Sauerstoff und 132 m$^3$ aus dem Ofen 2 zum Brenner 1 zurückgeführten Abgas verbrannt. Die Wärmekapazität der rückgeführten Abgasmenge entspricht der Wärmekapazität des im Luftbetrieb des Brenners in der Luft enthaltenen Stickstoffs. Eine Überhitzung und Schädigung des Brenners 1 wird so ausgeschlossen. Bei dieser Verbrennung entstehen 198 m$^3$ Abgas, von denen aber 132 m$^3$ im Kreis geführt werden, so daß lediglich 66 m3 Abgas aus dem Ofen 2 über Leitung 10 entweichen. Im Vergleich mit der Luftfahrweise wird so die an die Atmosphäre abgegebene Abgasmenge auf etwa ein Viertel reduziert. Die Aufheizzeit des Gutes 3 läßt sich mit dieser Verfahrensweise um 35 % verringern, wobei praktisch kein $NO_x$ produziert wird.

Der Brenner 1 kann aber auch von Beginn an mit Sauerstoff und Abgasrückführung gefahren werden. In diesem Fall ist das Ventil 9 so geschaltet, daß die Verbindung zu den Leitungen 7 und 8 immer geöffnet ist. Um bei dieser Verfahrensweise bei niedrigen Temperaturen mindestens den gleichen Wärmeübertragungsgrad auf das Gut 3 zu erzielen wie mit einem Luftbrenner, muß in etwa die gleiche Abgasmenge wie bei einem Luftbrenner erzeugt werden. Bei gleichen Abgasmengen ist die Wärmeübertragung durch Konvektion annähernd identisch. Wie oben erläutert, entstehen bei der Verbrennung von 22 m$^3$ Erdgas mit 44 m$^3$ Sauerstoff und 132 m$^3$ rückgeführtem Abgas im Ofen 198 m$^3$ Abgas. Es müssen daher in der ersten Phase der Sauerstofffahrweise mindestens 44 m$^3$ Fremdabgase zusätzlich zu dem Brenner 1 geleitet werden, um insgesamt im Ofen 2 die gleiche Abgasmenge zu erhalten wie beim Luftbetrieb. In der Praxis wird eine etwas größere Menge benötigt, da nicht das gesamte bei der Verbrennung entstehende Abgas zurückgeführt werden kann. Die Fremdabgase können beispielsweise aus parallel arbeitenden Öfen abgezogen werden. Dies bietet sich insbesondere dann an, wenn mehrere Öfen an einem zentralen Abgasschlot angeschlossen sind.

Steht kein Fremdabgas zur Verfügung, so hat sich in der Anfangsphase folgende Fahrweise des Brenners 1 bewährt. Der Brenner 1 wird als Sauerstoffbrenner betrieben. Über die Abgasrückleitung 8 wird mit hoher Saugleistung nahezu das gesamte im Ofen 2 erzeugte Abgas angesaugt und zu dem Brenner 1 zurückgeführt. Aufgrund der hohen Saugleistung wird auch eine größere Menge an Fremdluft durch Ofenundichtigkeiten mit zum Brenner 1 gesaugt. Auf diese Weise steht genügend Ballastgas zur Verfügung, um eine gute Wärmeübertragung durch Konvektion auf das Gut 3 zu erzielen. Bereits nach wenigen Minuten wird auf diese Weise ein stabiler Betriebszustand erreicht.

Mit steigender Guttemperatur wird die anfängliche Abgasmenge, die sich aus bei der Verbrennung anfallendem Abgas und Fremdabgas zusammensetzt, bei Erreichen der Umschalttemperatur von 600 °C soweit reduziert, daß nur noch 132 m$^3$ Abgas im Kreis gefahren werden.

Die Abgasreduzierung kann auch kontinuierlich erfolgen. Hierzu wird laufend die Guttemperatur gemessen und die dem Brenner 1 zugeführte Abgasmenge in Abhängigkeit von der Guttemperatur und/oder der Aufheizgeschwindigkeit des Gutes 3 und/oder der Aufheizbeschleunigung verringert. Beispielsweise wird der Wert der Guttemperatur in einen Rechner eingelesen, der daraus die Aufheizgeschwindigkeit und -beschleunigung berechnet und entsprechend dieser Parameter ein Stellventil in der Abgasleitung 8 ansteuert.

**Patentansprüche**

1.  Verfahren zum Betreiben eines Gasbrenners (1) zum Erwärmen von Gut (3) in einem Ofen (2), wobei ein Brenngas, insbesondere Erdgas, mit einem Gasgemisch verbrannt wird, welches Sauerstoff und Ballastgase enthält, **dadurch gekennzeichnet, daß** die Menge der Ballastgase in dem Gasgemisch in Abhängigkeit von der Guttemperatur verändert wird, wobei unterhalb einer Umschalttemperatur das Brenngas mit Luft verbrannt wird und bei Guttemperaturen oberhalb der Umschalttemperatur das Brenngas mit Sauerstoff und einem $CO_2$-$H_2O$-Gemisch oder mit Sauerstoff und $CO_2$ verbrannt wird, wobei die Umschalttemperatur zwischen 400 °C und 800 °C liegt.

2.  Verfahren nach Anspruch 1, **dadurch gekennzeichnet, daß** die Guttemperatur wiederholt gemessen, aus den Meßwerten die Aufheizgeschwindigkeit und/oder die Aufheizbeschleunigung bestimmt und in Abhängigkeit von der Aufheizgeschwindigkeit oder Aufheizbeschleunigung das Brenngas entweder mit Luft verbrannt wind oder mit Sauerstoff und einem $CO_2$-$H_2O$-Gemisch oder mit Sauerstoff und $CO_2$ verbrannt wird.

3.  Verfahren nach Anspruch 1 oder 2, **dadurch gekennzeichnet, daß** die Wärmekapazität des $CO_2$-$H_2O$-Gemisches oder des $CO_2$ gleich der Wärmekapazität des Stickstoffanteils der Luftmenge ist, deren Sauerstoffanteil der Menge des dem Brenner zugeführten Sauerstoffs entspricht.

4.  Verfahren nach einem der Ansprüche 1 bis 3, **dadurch gekennzeichnet, daß** die Umschalttemperatur bevorzugt zwischen 500 °C und 700 °C, besonders bevorzugt zwischen 550 °C und 650 °C liegt.

5.  Verfahren nach einem der Ansprüche 1 bis 4, **dadurch gekennzeichnet, daß** die Menge an dem $CO_2$-$H_2O$-Gemisch oder $CO_2$ bei steigenden Guttemperaturen Kontinuierlich bis zu einem Minimalwert reduziert wird.

6.  Verfahren zum Betreiben von Brennern zur Wärmebehandlung von Gut in einem Durchlaufofen nach einem der Ansprüche 1 bis 5, **dadurch gekennzeichnet, daß** die Brenner in der Aufheizzone mit Brenngas und Luft betrieben werden und die Brenner in der Überhitzungszone mit Brenngas und Sauerstoff sowie einem $CO_2$-$H_2O$-Gemisch oder $CO_2$ betrieben werden.

7.  Verfahren nach Anspruch 6, **dadurch gekennzeichnet, daß** das Brenngas mit Sauerstoff und einem $CO_2$-$H_2O$-Gemisch oder mit Sauerstoff und $CO_2$ verbrannt wird und daß die Menge an dem $CO_2$-$H_2O$-Gemisch oder $CO_2$ bei steigenden Guttemperaturen bis zu einem Minimalwert reduziert wird.

8.  Verfahren nach Anspruch 7, **dadurch gekennzeichnet, daß** die Guttemperatur wiederholt gemessen, aus den Meßwerten die Aufheizgeschwindigkeit und/oder die Aufheizbeschleunigung bestimmt und die Menge des $CO_2$-$H_2O$-Gemisches oder des $CO_2$ in Abhängigkeit von der Aufheizgeschwindigkeit oder Aufheizbeschleunigung bestimmt wird.

9.  Verfahren nach einem der Ansprüche 1 bis 8, **dadurch gekennzeichnet, daß** die Menge des $CO_2$-$H_2O$-Gemisches oder des $CO_2$ zwischen dem 1,5- und 7-fachen, insbesondere zwischen dem 3- und 5-fachen, der dem Brenner zugeführten Sauerstoffmenge liegt.

10. Verfahren nach einem der Ansprüche 1 bis 9, **dadurch gekennzeichnet, daß** zumindest ein Teil des bei der Verbrennung entstehenden Abgases zum Brenner zurückgeführt wird.

11. Verfahren nach Anspruch 10, **dadurch gekennzeichnet, daß** das zurückgeführte Abgas gekühlt wird.

12. Verfahren nach einem der Ansprüche 10 oder 11, **dadurch gekennzeichnet, daß** zwischen 50 und 100 % des bei der Verbrennung entstehenden Abgases zurückgeführt werden.

13. Anwendung des Verfahrens nach einem der Ansprüche 1 bis 12 in einem Industrieofen.

14. Gasbrenner (1) zum Erwärmen von Gut (3) in einem Ofen (2), wobei mindestens eine Zuleitung (4) für ein Brenngas, mindestens eine Zuleitung (6) für Luft, mindestens eine Zuleitung (7) für Sauerstoff und mindestens eine Zuleitung (8) für ein $CO_2$-$H_2O$-Gemisch oder $CO_2$, sowie Mittel (9,5) zur Verbindung der Zuleitung (6) für Luft oder der Zuleitung (7) für Sauerstoff sowie der Zuleitung (8) für ein $CO_2$-$H_2O$-Gemisch oder $CO_2$ mit dem Gasbrenner (1) vorgesehen sind.

15. Gasbrenner nach Anspruch 14, **dadurch gekennzeichnet, dass** die Zuleitung (8) für ein $CO_2$-$H_2O$-Gemisch oder $CO_2$ als Abgasrückleitung (8) von dem Ofen (2) zu dem Gasbrenner (1) ausgebildet ist.

16. Gasbrenner nach Anspruch 15, **dadurch gekennzeichnet, daß** die Zuleitung (7) für den Sauerstoff in die Abgasrückleitung (8) mündet.

17. Gasbrenner nach Anspruch 15 oder 16, **dadurch gekennzeichnet, daß** eine Düse (11) vorgesehen ist, mittels der Sauerstoff in die Abgasrückleitung (8) eingedüst und Abgas über die Abgasrückleitung (8) aus dem Ofen (2) angesaugt werden kann.

**Claims**

1.  Method for operating a gas burner (1) for heating material (3) in a furnace (2), in which a fuel gas, in particular natural gas, is burnt with a gas mixture which contains oxygen and ballast gases, **characterized in that** the quantity of the ballast gases in the gas mixture is changed as a function of the temperature of the material, the fuel gas being burnt with air at temperatures which lie below a changeover temperature, and the fuel gas being burnt with oxygen and a $CO_2$-$H_2O$ mixture or with oxygen and $CO_2$ at temperatures which lie above the changeover temperature, the changeover temperature lying between 400°C and 800°C.

2.  Method according to Claim 1, **characterized in that** the temperature of the material is measured repeatedly, the measured values are used to determine the heat-up rate and/or the heat-up acceleration, and the fuel gas being burnt either with air or with oxygen and a $CO_2$-$H_2O$ mixture or with oxygen and $CO_2$ as a function of the heat-up rate or heat-up acceleration.

3.  Method according to Claim 1 or 2, **characterized in that** the heat capacity of the $CO_2$-$H_2O$ mixture or of the $CO_2$ is equal to the heat capacity of the nitrogen content of the quantity of air, the quantity of oxygen in which corresponds to the quantity of oxygen supplied to the burner.

4.  Method according to one of Claims 1 to 3, **characterized in that** the changeover temperature preferably lies between 500°C and 700°C, particularly preferably between 550°C and 650°C.

5.  Method according to one of Claims 1 to 4, **characterized in that** the quantity of the $CO_2$-$H_2O$ mixture or of $CO_2$ is reduced continuously to a minimum level as the temperatures of the material rise.

6.  Method for operating burners for the heat treatment of material in a continuous furnace according to one of Claims 1 to 5, **characterized in that** the burners in the heating zone are operated with fuel gas and air, and the burners in the super-heating zone are operated with fuel gas and oxygen and a $CO_2$-$H_2O$ mixture or $CO_2$.

7.  Method according to Claim 6, **characterized in that** the fuel gas is burnt with oxygen and a $CO_2$-$H_2O$ mixture or with oxygen and $CO_2$, and **in that** the amount of the $CO_2$-$H_2O$ mixture or of $CO_2$ is reduced to a minimum level as the temperatures of the material rise.

8.  Method according to Claim 7, **characterized in that** the temperature of the material is measured repeatedly, the measured values are used to determine the heat-up rate and/or the heat-up acceleration, and the quantity of the $CO_2$-$H_2O$ mixture or of the $CO_2$ is determined as a function of the heat-up rate or heat-up acceleration.

9. Method according to one of Claims 1 to 8, **characterized in that** the quantity of the $CO_2$-$H_2O$ mixture or of the $CO_2$ is between 1.5 and 7 times, in particular between 3 and 5 times, the quantity of oxygen supplied to the burner.

10. Method according to one of Claims 1 to 9, **characterized in that** at least some of the off-gas which is formed during the combustion is returned to the burner.

11. Method according to Claim 10, **characterized in that** the off-gas which is returned is cooled.

12. Method according to one of Claims 10 or 11, **characterized in that** between 50 and 100% of the off-gas formed during the combustion is returned.

13. Use of the method according to one of Claims 1 to 12 in an industrial furnace.

14. Gas burner (1) for heating material (3) in a furnace (2), in which at least one feed line (4) for a fuel gas, at least one feed line (6) for air, at least one feed line (7) for oxygen and at least one feed line (8) for a $CO_2$-$H_2O$ mixture or $CO_2$, and also means (9, 5) for connecting the feed line (6) for air or the feed line (7) for oxygen and the feed line (8) for a $CO_2$-$H_2O$ mixture or $CO_2$ to the gas burner (1) are provided.

15. Gas burner according to Claim 14, **characterized in that** the feed line (8) for a $CO_2$-$H_2O$ mixture or $CO_2$ is designed as an off-gas return line (8) from the furnace (2) to the gas burner (1).

16. Gas burner according to Claim 15, **characterized in that** the feed line (7) for the oxygen opens out into the off-gas return line (8).

17. Gas burner according to Claim 15 or 16, **characterized in that** a nozzle (11) is provided, by means of which oxygen can be injected into the off-gas return line (8) and off-gas can be sucked out of the furnace (2) via the off-gas return line (8).

**Revendications**

1. Procédé d'exploitation d'un brûleur à gaz (1) pour chauffer un produit (3) dans un four (2) dans lequel un gaz combustible, en particulier au gaz naturel, est brûlé avec un mélange de gaz qui contient de l'oxygène et des gaz inertes, **caractérisé en ce que** la quantité des gaz inertes dans le mélange de gaz est modifiée en fonction de la température du produit, le gaz combustible étant brûlé avec de l'air au-dessous d'une température de commutation et le gaz combustible étant brûlé avec de l'oxygène et un mélange de $CO_2$ et de $H_2O$ ou avec de l'oxygène et du $CO_2$ à des températures au-delà de la température de commutation qui se situe entre 400°C et 800°C.

2. Procédé selon la revendication 1, **caractérisé en ce que** la température est mesurée de façon répétée, la vitesse du chauffage et/ou l'accélération du chauffage est déterminée à partir des valeurs mesurées et le gaz combustible est brûlé en fonction de la vitesse du chauffage ou de l'accélération du chauffage, soit avec de l'air, soit avec de l'oxygène et un mélange d'$H_2O$ et de $CO_2$, soit avec de l'oxygène et du $CO_2$.

3. Procédé selon la revendication 1 ou 2, **caractérisé en ce que** la chaleur spécifique du mélange de $CO_2$ et d'$H_2O$ ou du $CO_2$ est égale à la chaleur spécifique de la proportion en azote de la quantité d'air dont la proportion en oxygène correspond à la quantité d'oxygène amenée au brûleur.

4. Procédé selon l'une quelconque des revendications 1 à 3, **caractérisé en ce que** la température de commutation se situe de préférence entre 500°C et 700°C, de façon particulièrement préférée entre 550°C et 650°C.

5. Procédé selon l'une quelconque des revendications 1 à 4, **caractérisé en ce que** la quantité de mélange de $CO_2$ et d'$H_2O$ ou de $CO_2$ est réduite lors de températures de produit croissantes de façon continue jusqu'à une valeur minimale.

6. Procédé d'exploitation de brûleurs pour le traitement thermique d'un produit dans un four continu selon l'une quelconque des revendications 1 à 5, **caractérisé en ce que** les brûleurs dans la zone de chauffage fonctionnent au gaz combustible et à l'air et les brûleurs dans la zone de surchauffe fonctionnent au gaz combustible ou à l'oxygène ainsi qu'à un mélange d'$H_2O$ et de $CO_2$ ou au $CO_2$.

7. Procédé selon la revendication 6, **caractérisé en ce que** le gaz combustible est brûlé avec de l'oxygène et avec un mélange de $CO_2$ et d'$H_2O$ ou avec de l'oxygène et du $CO_2$ et **en ce que** la quantité de mélange d'$H_2O$ et de $CO_2$ ou de $CO_2$ est réduite lors de températures de produit croissantes jusqu'à une valeur minimale.

**8.** Procédé selon la revendication 7, **caractérisé en ce que** la température de produit est mesurée de façon répétée, la vitesse du chauffage et/ou l'accélération du chauffage est déterminée à partir des valeurs mesurées et la quantité de mélange d'$H_2O$ et de $CO_2$ ou de $CO_2$ est déterminée en fonction de la vitesse du chauffage ou de l'accélération du chauffage.

**9.** Procédé selon l'une quelconque des revendications 1 à 8, **caractérisé en ce que** la quantité de mélange d'$H_2O$ et de $CO_2$ ou de $CO_2$ se situe entre 1,5 et 7 fois, en particulier entre 3 et 5 fois la quantité d'oxygène amenée au brûleur.

**10.** Procédé selon l'une quelconque des revendications 1 à 9, **caractérisé en ce qu'**au moins une partie des fumées produites lors de la combustion sont recyclées vers le brûleur.

**11.** Procédé selon la revendication 10, **caractérisé en ce que** les fumées recyclées sont refroidies.

**12.** Procédé selon l'une quelconque des revendications 10 ou 11, **caractérisé en ce que** entre 50 et 100% des fumées produites lors de la combustion sont recyclées.

**13.** Application du procédé selon l'une quelconque des revendications 1 à 12 dans un four industriel.

**14.** Brûleur au gaz (1) pour chauffer un produit (3) dans un four (2), dans lequel sont prévus au moins une conduite d'amenée (4) pour le gaz combustible, au moins une conduite d'amenée (6) pour l'air, au moins une conduite d'amenée (7) pour l'oxygène et au moins une conduite d'amenée (8) pour un mélange de $CO_2$ et d'$H_2O$ ou pour le $CO_2$, ainsi que des moyens (9,5) de raccordement de la conduite d'amenée (6) pour l'air ou de la conduite d'amenée (7) pour l'oxygène et de la conduite d'amenée (8) pour un mélange d'$H_2O$ et de $CO_2$ ou pour le $CO_2$ au brûleur (1).

**15.** Brûleur au gaz selon la revendication 14, **caractérisé en ce que** la conduite d'amenée (8) pour un mélange d'$H_2O$ et de $CO_2$ ou pour le $CO_2$ est conformée comme conduite de recyclage de fumées (8) s'étendant du four (2) au brûleur au gaz (1).

**16.** Brûleur au gaz selon la revendication 15, **caractérisé en ce que** la conduite d'amenée (7) pour l'oxygène débouche dans la conduite de recyclage de fumées (8).

**17.** Brûleur au gaz selon la revendication 15 ou 16, **caractérisé en ce qu'**une tuyère (11) est prévue au moyen de laquelle de l'oxygène peut être injecté dans la conduite de recyclage de fumées (8) et des fumées peuvent être aspirées du four (2) via la conduite de recyclage de fumées (8).

Figur
Blatt 1/1